# EUROPÄISCHE PATENTSCHRIFT

(11) **EP 3 592 141 B1**
(45) Veröffentlichungstag und Bekanntmachung des Hinweises auf die Patenterteilung: **22.09.2021**
(21) Anmeldenummer: 18708999.0
(22) Anmeldetag: 05.03.2018
(51) Int. Cl.: A01M 1/02

(54) **INSEKTENFALLE**
INSECT TRAP
PIÈGE À INSECTES

(30) Priorität: 06.03.2017 DE 202017101251 U
(43) Veröffentlichungstag der Anmeldung: 15.01.2020
(73) Patentinhaber: EPD Eckhoff GmbH, 91126 Schwabach (DE)
(72) Erfinder: ECKHOFF, Detlef, 91156 Roth (DE)
(74) Vertreter: Rau, Schneck & Hübner Patentanwälte Rechtsanwälte PartGmbB
(86) Internationale Anmeldenummer: PCT/EP2018/055342
(87) Internationale Veröffentlichungsnummer: WO 2018/162411

(56) Entgegenhaltungen:
- EP-A2- 1 219 171
- DE-U1- 29 815 489
- US-A- 4 144 668
- US-A1- 2007 144 056
- US-B1- 6 305 122

## Beschreibung

Die vorliegende Patentanmeldung nimmt die Priorität der deutschen Gebrauchsmusteranmeldung DE 20 2017 101 251.4 in Anspruch.

Die Erfindung betrifft eine Insektenfalle, insbesondere für Fluginsekten, wie Taufliegen, die auch als Obst- bzw. Fruchtfliegen bekannt sind, Ameisen oder dergleichen, gemäß dem Oberbegriff des Anspruchs 1. Die Insektenfalle ist beispielsweise auch für Fischchen einsetzbar.

Aus dem Stand der Technik ist durch offenkundige Vorbenutzung eine Vielzahl unterschiedlichster Insektenfallen bekannt. Oftmals ist deren Handhabung bzw. Wirkung und Design nicht zufriedenstellend.

Aus der US 2007/0144056 A1 ist eine gattungsgemäße Insektenfalle bekannt, die ein Gehäuse mit einem Oberteil und Unterteil umfasst. In dem Oberteil ist eine Vielzahl elektrischer Gitter angeordnet. Die elektrischen Gitter stehen mit einer elektronischen Schaltung in elektrischer Verbindung. Elektrischer Strom kann von einem Gitter über ein Insekt auf das andere Gitter unter Tötung desselben überspringen.

Die EP 1 219 171 A2, US 6 305 122 B1, US 4 144 668 und DE 298 15 489 U1 offenbaren weitere bekannte Insektenfallen.

Der Erfindung liegt die Aufgabe zugrunde, eine Insektenfalle zu schaffen, die einerseits besonders wirksam und andererseits äußerst benutzerfreundlich ist. Die Insektenfalle soll außerdem im Design ansprechend und insbesondere sehr unauffällig sein.

Diese Aufgabe wird erfindungsgemäß durch die in dem Anspruch 1 angegebenen Merkmale gelöst. Der Kern liegt darin, dass das Gehäuse zweiteilig und dadurch vergleichsweise flach ausgeführt ist und somit eine äußerst hohe Standsicherheit hat. Ferner ist ein solches Gehäuse optisch ansprechend und gut in einen Gebäude-, insbesondere Wohnraum, integrierbar. Das Gehäuse weist eine Querabmessung Q und eine Höhe H auf, wobei gilt: 0,1 ≤ H/Q ≤ 0,9, insbesondere 0,15 ≤ H/Q ≤ 0,7, und insbesondere 0,3 ≤ H/Q ≤ 0,5. Günstigerweise liegt die Höhe des Gehäuses zwischen 2 cm und 6 cm, bevorzugter zwischen 2,5 cm und 4 cm. Die Insektenfalle ist vorzugsweise mobil einsetzbar bzw. tragbar.

Das Gehäuse ist günstigerweise aus einem Kunststoffmaterial gebildet. Alternativ ist es beispielsweise aus einem Metallmaterial gebildet. Das Oberteil und/oder Unterteil ist vorzugsweise schalenförmig ausgeführt. Es ist zweckmäßig, wenn zumindest das Oberteil einer stilisierten Frucht, insbesondere einem Apfel, nachempfunden ist. Das Oberteil bildet vorzugsweise ein Schutzteil.

Insbesondere ist die Insekten-Tötungsanordnung im Stande, Insekten durch einen elektrischen Schlag bzw. Kurzschluss zu töten bzw. zu verbrennen, die die Insekten-Tötungsanordnung berühren oder in deren Nähe gelangen. Die Insekten-Tötungsanordnung ist beispielsweise als Hochspannungs-Insekten-Tötungsanordnung ausgeführt. Sie führt dann bevorzugt nur einen geringen elektrischen Strom.

Die Insekten-Tötungsanordnung ist günstigerweise dauerhaft, alternativ periodisch, mit elektrischer Energie versorgt. Alternativ ist sie durch mindestens einen Insekten-Erfassungssensor zeitweise mit elektrischer Energie versorgbar.

Die mindestens eine Energieversorgungseinrichtung ermöglicht eine Energieversorgung und gibt im Betrieb elektrischen Strom und/oder elektrische Spannung zur Versorgung der elektrischen Einrichtungen der Insektenfalle, insbesondere der Insekten-Tötungsanordnung, mit der benötigten Energie ab. Die mindestens eine Energieversorgungseinrichtung weist jeweils zwei Energieversorgungsanschlüsse auf, die mit der elektrischen Insekten-Tötungsanordnung elektrisch leitend verbunden sind. An die Energieversorgungsanschlüsse ist beispielsweise mindestens eine Solarzelle, eine Batterie und/oder ein Akkumulator anschließbar. Vorzugsweise umfasst die Energieversorgungseinrichtung mindestens eine Solarzelle, eine Batterie und/oder einen Akkumulator zur netzunabhängigen Energieversorgung. Alternativ oder zusätzlich ist ein Netzteilanschluss bzw. Netzteil vorhanden. Vorzugsweise ist dann außerdem ein Gleichrichtungskreis vorhanden.

Es ist von Vorteil, wenn die mindestens eine Energieversorgungseinrichtung eine Elektroeinheit, wie eine Energieverstärkungseinrichtung zum Anlegen verstärkter elektrischer Energie an die Insekten-Tötungsanordnung, umfasst. Günstigerweise ist ein Transformator zum Hochtransformieren der elektrischen Spannung vorhanden.

Bei dem mindestens einen Insekten-Anlockelement handelt es sich vorzugsweise um einen, insbesondere natürlichen und/oder synthetischen, Lockstoff, der einen anlockenden bzw. ködernden Geruch für die Insekten verbreitet. Alternativ ist das mindestens eine Insekten-Anlockelement zum Beispiel eine Lichtquelle, insbesondere eine UV-Lichtquelle. Beispielsweise ist eine Kombination unterschiedlicher Insekten-Anlockelemente vorhanden, sodass insbesondere unterschiedlichste Insekten anlockbar sind.

Die mindestens eine Anlockelement-Aufnahme ist vorzugsweise beheizbar. Hierzu weist die Insektenfalle mindestens eine Anlockelement-Heizung auf. Die mindestens eine Anlockelement-Heizung dient zum Erwärmen eines Lockstoffes, der in der zugehörigen Anlockelement-Aufnahme angeordnet ist. Die mindestens eine Anlockelement-Heizung ist hierzu im Bereich der zugehörigen Anlockelement-Aufnahme angeordnet. Vorzugsweise ist die Anlockelement-Heizung mittels eines Schalters ein- und ausschaltbar. Vorzugsweise ist die mindestens eine Anlockelement-Heizung mittels der mindestens einen elektrischen Energieversorgungseinrichtung betreibbar. Mittels der mindestens einen Anlockelement-Heizung ist der Lockstoff insbesondere auf mindestens 30 °C, insbesondere auf mindestens 40 °C, und insbesondere auf mindestens 50 °C erwärmbar. Hierdurch wird die Verbreitung des Lockstoffs verbessert.

Die Insekten-Tötungsanordnung lässt günstigerweise einen Lockstoffgeruch und/oder Licht des mindestens einen Insekten-Anlockelements durch. Es ist zweckmäßig, wenn die Insekten-Tötungsanordnung die angelockten Insekten von dem mindestens einen Insekten-Anlockelement fernhält.

Es ist von Vorteil, wenn der mindestens eine Insekteneingang in dem Oberteil, dem Unterteil und/oder zwischen dem Oberteil und dem Unterteil ausgebildet ist. Günstigerweise ist der mindestens eine Insekteneingang derart ausgeführt, dass die zu tötenden Insekten durch diesen in das Gehäuse fliegen und/oder kriechen können. Es ist von Vorteil, wenn mehrere, insbesondere gleichmäßig, zueinander beabstandete Insekteneingänge vorhanden sind.

Die Insektenfalle ist aufgrund der Anordnung der Insekten-Tötungsanordnung in dem Unterteil besonders wirksam.

Das Oberteil und das Unterteil sind vorzugsweise zusammensteckbar. Das mindestens eine Verbindungselement ist vorzugsweise stiftartig oder stegartig ausgeführt. Es erstreckt sich bevorzugt vertikal. Es ist von Vorteil, wenn das mindestens eine Verbindungselement an dem Oberteil oder dem Unterteil angeordnet ist. Alternativ ist es beispielsweise durch ein an dem Oberteil angeordnetes Oberteil-Verbindungselement und ein an dem Unterteil angeordnetes Unterteil-Verbindungselement gebildet.

Das mindestens eine Verbindungselement ist günstigerweise elektrisch leitend. Beispielsweise ist es dazu vollständig aus einem elektrisch leitenden Material oder nur teilweise aus einem solchen Material gebildet. Beispielsweise umfasst es mindestens einen elektrischen Leiter.

Eine Trennung des Oberteils und des Unterteils voneinander führt so günstigerweise zu einer automatischen Außerbetriebsetzung der Insektenfalle bzw. der Insekten-Tötungsanordnung, was aus Sicherheitsgründen sehr vorteilhaft ist. Die Energieversorgung der Insekten-Tötungsanordnung bzw. der Stromkreis der Insektenfalle ist dann bevorzugt unterbrochen.

Weitere vorteilhafte Ausgestaltungen der Erfindung sind in den Unteransprüchen angegeben.

Es ist zweckmäßig, wenn die ersten und/oder zweiten Insekten-Tötungselemente gemäß dem Unteranspruch 2 konstruktiv identisch sind und beispielsweise durch Drähte, metallische Stäbe, Streifen oder dergleichen gebildet sind.

Die ersten und zweiten Insekten-Tötungselemente liegen vorzugsweise in einer gemeinsamen horizontalen Ebene und sind in dieser beabstandet zu einander angeordnet. Die Insekten-Tötungselemente erstrecken sich dann vorzugsweise parallel zueinander.

Alternativ verlaufen beispielsweise die ersten und zweiten Insekten-Tötungselemente in unterschiedlichen horizontalen Ebenen übereinander und sind vertikal beabstandet zueinander angeordnet. Sie sind dann bevorzugt gitterartig angeordnet bzw. ausgebildet.

Die ersten und zweiten Insekten-Tötungselemente sind bevorzugt zueinander elektrisch isoliert. Ansonsten liegt das elektrisch leitfähige Material zum Töten der Insekten vorzugsweise frei. Der Abstand der Insekten-Tötungselemente zueinander ist, insbesondere wenn diese in einer gemeinsamen horizontalen Ebene angeordnet sind, vorzugsweise kleiner als die zu tötenden Insekten.

Die ersten und zweiten Insekten-Tötungselemente stehen mit dem jeweiligen Pol der mindestens einen Energieversorgungseinrichtung in elektrischer Verbindung. Die ersten und zweiten Insekten-Tötungselemente haben im Betrieb der Insektenfalle ein unterschiedliches Potential. Beispielsweise stehen die ersten Insekten-Tötungselemente mit dem Pluspol der mindestens einen Energieversorgungseinrichtung in elektrischer Verbindung, während dann die zweiten Insekten-Tötungselemente mit dem Minuspol der mindestens einen Energieversorgungseinrichtung in elektrischer Verbindung stehen.

Günstigerweise ist zwischen den ersten und zweiten Insekten-Tötungselementen, insbesondere wenn diese vertikal beabstandet zueinander angeordnet sind, mindestens ein elektrisches Isolationselement angeordnet. Das mindestens eine Isolationselement ist vorzugsweise aus einem Kunststoffmaterial gebildet. Es ist zweckmäßig, wenn dieses gitterartig ist. Vorzugsweise erstreckt sich das mindestens eine Isolationselement zumindest über die Querabmessungen der ersten und/oder zweiten Insekten-Tötungselemente.

Die Insektenfalle gemäß dem Unteranspruch 3 erfordert eine äußerst geringe Höhe. Unter horizontal ist insbesondere parallel zu einer Standfläche des Gehäuses, insbesondere des Unterteils, zu verstehen.

Auch die Insektenfalle gemäß dem Unteranspruch 4 zeichnet sich durch ihre hohe Wirksamkeit aus. Das mindestens eine Personenschutz-Isolationselement ist vorzugsweise aus einem Kunststoffmaterial gebildet. Es ist bevorzugt gitterartig. Günstigerweise erstreckt sich das mindestens eine Personenschutz-Isolationselement zumindest vollständig über die mindestens eine Anlockelement-Aufnahme.

Die Insektenfalle gemäß dem Unteranspruch 5 ist besonders gut reinigbar bzw. leerbar. Das mindestens eine Insekten-Auffangelement ist günstigerweise wannenförmig. Es umgibt vorzugsweise seitlich die mindestens eine Anlockelement-Aufnahme und/oder die Insekten-Tötungsanordnung.

Die Anzeige gemäß Unteranspruch 6 zeigt optisch günstigerweise interessante bzw. wertvolle Funktionsinformationen bzw. Betriebszustandsinformationen der Insektenfalle an. Sie ist beispielsweise als elektrische bzw. elektronische Anzeige, wie durch mindestens eine LED, ausgeführt. Gemäß dem Unteranspruch 9 ist das Oberteil auswechselbar, wobei vorzugsweise verschiedene Oberteile bei der Insektenfalle einsetzbar sind. Das Oberteil und das Unterteil sind so in zusammengesetztem Zustand der Insektenfalle lösbar miteinander verbunden. Durch die Auswechselbarkeit des Oberteils ist die Insektenfalle leicht individuell, beispielsweise an die Umgebung bzw. einen persönlichen Geschmack, anpassbar. Das Oberteil ist vorzugsweise ein Wechselteil.

Die Ausgestaltung gemäß dem Unteranspruch 10 erlaubt einen einfachen Austausch der mindestens einen Anlockelement-Aufnahme bzw. des mindestens einen Insekten-Anlockelements. Die Insektenfalle ist so insbesondere wieder befüllbar bzw. verwendbar. Die mindestens eine Anlockelement-Aufnahme ist günstigerweise an einem Bodenteil angeordnet. Das Bodenteil ist vorzugsweise herausdrehbar.

Die Ausgestaltung gemäß dem Unteranspruch 11 ermöglicht ein Erwärmen des Lockstoffes und somit eine verbesserte Verbreitung des Lockstoffes. Das Anlocken von Insekten wird hierdurch verbessert.

Nachfolgend werden unter Bezugnahme auf die beigefügte Zeichnung zwei bevorzugte Ausführungsformen der Erfindung beispielhaft beschrieben. Dabei zeigen:
- Fig. 1: einen vereinfachten Querschnitt einer erfindungsgemäßen Insektenfalle in zusammengesetztem Zustand gemäß einer ersten Ausführungsform, und
- Fig. 2: einen vereinfachten Querschnitt einer erfindungsgemäßen Insektenfalle in zusammengesetztem Zustand gemäß einer zweiten Ausführungsform.

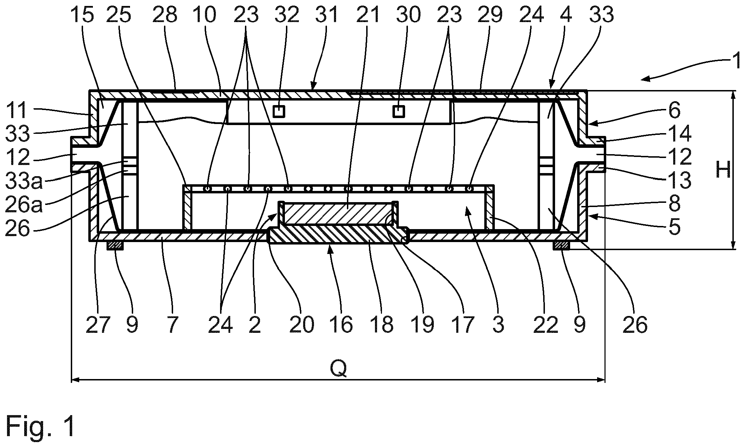

Die in Fig. 1 gezeigte Insektenfalle umfasst ein im Wesentlichen geschlossenes Gehäuse 1, eine in dem Gehäuse 1 angeordnete Anlockelement-Aufnahme 2 und eine in dem Gehäuse 1 angeordnete Insekten-Tötungsanordnung 3 sowie eine elektrische Energieversorgungseinrichtung 4.

Das Gehäuse 1 wiederum weist ein Unterteil 5 und ein Oberteil 6 auf, das in zusammengesetztem Zustand des Gehäuses 1 mit dem Unterteil 5 in lösbarer Verbindung steht.

Das Unterteil 5 hat einen Boden 7 und eine von dem Boden 7 nach oben vorspringende, umlaufende Unterteil-Seitenwandung 8. Der Boden 7 weist unten mindestens eine Standfläche bzw. ein Standelement 9 zum standsicheren Aufstellen der Insektenfalle auf.

Das Oberteil 6 weist eine Decke 10 und eine von der Decke 10 nach unten vorspringende, umlaufende Oberteil-Seitenwandung 11 auf. Die Decke 10 verläuft vorzugsweise parallel zu dem Boden 7. Die Oberteil-Seitenwandung 11 und die Unterteil-Seitenwandung 8 bilden zusammen eine Seitenwandung der Insektenfalle.

In dem Gehäuse 1 sind mehrere Insekteneingänge 12 mit entsprechenden äußeren Eingangsöffnungen ausgebildet. Die Insekteneingänge 12 sind durch die Oberteil-Seitenwandung 11 und die Unterteil-Seitenwandung 8 seitlich begrenzt. Im Bereich der Insekteneingänge 12 hat die Unterteil-Seitenwandung 8 und die Oberteil-Seitenwandung 11 vorzugsweise nach seitlich außen vorspringende Insekteneingangswandungen 13 bzw. 14. Die Insekteneingänge 12 münden in einen räumlich begrenzten Innenraum 15 des Gehäuses 1.

Das Gehäuse 1 hat eine maximale Höhe H, die durch den zwischen dem Boden 7 und der Decke 10 vorliegenden vertikalen Abstand bestimmt ist. Das Gehäuse 1 weist eine maximale horizontale Querabmessung Q auf, die durch die Unterteil-Seitenwandung 8 bzw. Oberteil-Seitenwandung 11 bestimmt ist. Es gilt: 0,1 ≤ H/Q ≤ 0,9, insbesondere 0,15 ≤ H/Q ≤ 0,7, und insbesondere 0,3 ≤ H/Q ≤ 0,5.

In den Boden 7 ist ein Anlockelement-Aufnahmekörper 16 eingesetzt. Der Anlockelement-Aufnahmekörper 16 hat eine kreisförmige Tragplatte 18, die komplementär zu einer in dem Boden 7, insbesondere zentral, ausgebildeten Bodenöffnung 17 ist. Der Anlockelement-Aufnahmekörper 16 weist außerdem eine von der Tragplatte 18 nach oben vorspringende, umfangsseitig geschlossene Aufnahmewand 19 auf. Durch die Tragplatte 18 und die Aufnahmewand 19 ist die Anlockelement-Aufnahme 2 räumlich begrenzt, in der ein geeigneter Lockstoff 21 zum Anlocken von Fluginsekten aufgenommen ist. Insbesondere ist der Anlockelement-Aufnahmekörper 16 durch Herausdrehen aus dem Boden 7 entfernbar und durch Eindrehen wieder einsetzbar. Dafür sind an der Tragplatte 18 und dem Boden 7 entsprechende Gewindestege bzw. Gewindestegaussparungen 20 ausgebildet. Die Tragplatte 18 bildet ein Bodenteil.

Zwischen der Unterteil-Seitenwandung 8 und der Bodenöffnung 17 springt von dem Boden 7 eine umfangsseitig geschlossene Tragwandung 22 nach oben vor. Die Tragwandung 22 trägt beabstandet zu dem Boden 7 die Insekten-Tötungsanordnung 3 und umgibt somit seitlich die Anlockelement-Aufnahme 2. Die Insekten-Tötungsanordnung 3 erstreckt sich horizontal oberhalb der Anlockelement-Aufnahme 2. Sie überdeckt die Tragwandung 22 und den durch diese begrenzten Innenraum vollständig.

Die Insekten-Tötungsanordnung 3 umfasst erste Insekten-Tötungselemente 23 und zweite Insekten-Tötungselemente 24, die parallel und beabstandet zueinander in einer gemeinsamen, horizontalen Insekten-Tötungsebene verlaufen. Die ersten und zweiten Insekten-Tötungselemente 23 und 24 sind abwechselnd angeordnet. Sie sind aus einem elektrisch leitfähigen metallischen Material gebildet und vorzugsweise in einem Rahmen 25 gehalten, der mit der Tragwandung 22 in Verbindung steht.

Zwischen der Tragwandung 22 und der Unterteil-Seitenwandung 8 springen von dem Boden 7 mehrere Unterteil-Verbindungsstifte 26 nach oben in Richtung auf die Decke 10 vor. In/an jedem Unterteil-Verbindungsstift 26 ist ein elektrischer Leiter (nicht dargestellt) geführt, der mit der Insekten-Tötungsanordnung 3 in direkter elektrischer Verbindung steht und an seinem freien, der Decke 10 zugewandten Ende einen freien elektrischen Kontakt 26a trägt.

In dem Unterteil 5 ist ferner vorzugsweise eine Insekten-Auffangwanne 27 aufgenommen. Die Insekten-Auffangwanne 27 bedeckt den Boden 7 teilweise und verläuft benachbart zu der Unterteil-Seitenwandung 8. Die Insekten-Auffangwanne 27 umläuft den Anlockelement-Aufnahmekörper 16 bzw. die Tragwandung 22.

An der Decke 10 ist außenseitig günstigerweise eine optische Anzeige 28 angeordnet, die mit der Energieversorgungseinrichtung 4 in direkter elektrischer Verbindung steht.

Die Energieversorgungseinrichtung 4 umfasst hier vorzugsweise mindestens eine außenseitig an der Decke 10 angeordnete Solarzelle 29. Außerdem weist die Energieversorgungseinrichtung 4 mindestens einen mit der Solarzelle 29 in elektrischer Verbindung stehenden Akkumulator 30 zum Speichern der durch die mindestens eine Solarzelle 29 erzeugten elektrischen Energie auf. Die Insektenfalle ist so auch bei Dämmerung und Dunkelheit betreibbar, wenn die mindestens eine Solarzelle 29 nicht mehr ausreichend Sonnenenergie empfängt.

Der mindestens eine Akkumulator 30 ist vorzugsweise Bestandteil einer Elektroeinheit 31 oder mit dieser elektrisch verbunden. Die Elektroeinheit 31 ist innenseitig an der Decke 10 angebracht. Die Elektroeinheit 31 umfasst ferner eine Energieverstärkungseinrichtung 32, die auch Bestandteil der Energieversorgungseinrichtung 4 ist und mit der mindestens einen Solarzelle 29, sofern vorhanden, und/oder dem mindestens einen Akkumulator 30 in direkter elektrischer Verbindung steht.

Von der Decke 10 springen innenseitig Oberteil-Verbindungsstifte 33 nach unten in Richtung auf den Boden 7 vor, die mit der Energieverstärkungseinrichtung 32 in direkter elektrischer Verbindung stehen. In/an jedem Oberteil-Verbindungsstift 33 ist ein elektrischer Leiter (nicht dargestellt) geführt, der mit der Energieverstärkungseinrichtung 32 in direkter elektrischer Verbindung steht und an seinem freien, dem Boden 7 zugewandten Ende einen freien elektrischen Kontakt 33a trägt.

In zusammengesetztem Zustand des Gehäuses 1 stehen die Oberteil-Verbindungsstifte 33 mit den Unterteil-Verbindungsstiften 26 über die Kontakte 33a, 26a in elektrischer Verbindung. Die ersten und zweiten Insekten-Tötungselemente 23, 24 stehen dann mit der Energieversorgungseinrichtung 4 bzw. der Energieverstärkungseinrichtung 32 in elektrischer Verbindung. Ein geschlossener Stromkreis liegt dann vor.

Nachfolgend wird der Einsatz der Insektenfalle beschrieben. Der Lockstoff 21 verbreitet einen entsprechenden Lockstoffgeruch, der über die Insekten-Tötungsanordnung 3 durch die Insekteneingänge 12 aus der Insektenfalle austritt und so Insekten in der Umgebung anlockt.

Die angelockten Insekten treten über die Insekteneingänge 12 in den Innenraum 15 des Gehäuses 1 ein und nähern sich dem Lockstoff 21. Dabei nähern sie sich auch der Insekten-Tötungsanordnung 3, die durch die Energieverstärkungseinrichtung 32 unter elektrische Hochspannung gesetzt ist. Die Energieverstärkungseinrichtung 32 wird von der mindestens einen Solarzelle 29 und/oder dem mindestens einen Akkumulator 30 mit elektrischer Energie versorgt.

Wenn ein Insekt das unter elektrischer Hochspannung stehende Material eines ersten Insekten-Tötungselements 23 und/oder eines benachbarten zweiten Insekten-Tötungselements 24 berührt bzw. sich unmittelbar benachbart zu diesem/diesen befindet, wird dieses Insekt mittels einer Funkenentladung bzw. eines elektrischen Kurzschlusses zwischen diesen Insekten-Tötungselementen 23, 24 getötet bzw. vernichtet. Durch die Insekten fließt dann kurzzeitig ein tödlicher elektrischer Strom.

Die Anzeige 28 zählt die Anzahl der erfolgten Funkenentladungen bzw. der elektrischen Schläge. Ferner zeigt sie den aktuellen elektrischen Energiestand des mindestens einen Akkumulators 30 an.

Die getöteten Insekten fallen dann nach unten in die Insekten-Auffangwanne 27. Von Zeit zu Zeit wird die Insekten-Auffangwanne 27 geleert. Dazu wird das Gehäuse 1 geöffnet, wobei die Kontakte 26a, 33a voneinander getrennt werden und die Insekten-Tötungsanordnung 3 stromlos wird. Das Oberteil 6 kann dann, falls gewünscht, ausgetauscht werden.

Außerdem wird von Zeit zu Zeit der Lockstoff 21 ersetzt. Dazu wird der Anlockelement-Aufnahmekörper 16 aus dem Boden 7 nach unten herausgedreht. Der neu mit Lockstoff 21 bestückte Anlockelement-Aufnahmekörper 16 wird analog dann wieder in den Boden 7 eingesetzt. Das Oberteil 6 und das Unterteil 5 bleiben dabei miteinander verbunden.

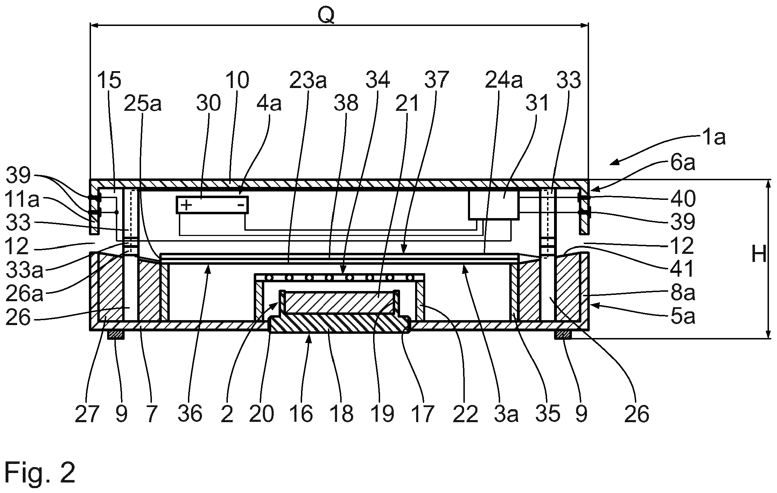

Nachfolgend wird unter Bezugnahme auf Fig. 2 eine zweite Ausführungsform beschrieben. Identische Teile erhalten dieselben Bezugszeichen wie bei der ersten Ausführungsform, auf deren Beschreibung explizit verwiesen wird. Funktional identische, jedoch konstruktiv unterschiedliche Teile bekommen die gleichen Bezugszeichen mit einem nachgeordneten "a".

Wie bei der vorherigen Ausführungsform, umfasst die Insektenfalle gemäß Fig. 2 ein im Wesentlichen geschlossenes Gehäuse 1a, eine in dem Gehäuse 1a angeordnete Anlockelement-Aufnahme 2 und eine in dem Gehäuse 1a angeordnete Insekten-Tötungsanordnung 3a sowie eine elektrische Energieversorgungseinrichtung 4a.

Das Gehäuse 1a wiederum weist ein Unterteil 5a und ein Oberteil 6a auf, das in zusammengesetztem Zustand des Gehäuses 1a mit dem Unterteil 5a in lösbarer Verbindung steht.

Das Unterteil 5a hat einen Boden 7 und eine von dem Boden 7 nach oben vorspringende Unterteil-Seitenwandung 8a. Der Boden 7 weist unten mindestens eine Standfläche bzw. ein Standelement 9 zum standsicheren Aufstellen der Insektenfalle auf.

Das Oberteil 6a weist eine Decke 10 und eine von der Decke 10 nach unten vorspringende, umlaufende Oberteil-Seitenwandung 11a auf. Die Decke 10 verläuft vorzugsweise parallel zu dem Boden 7. Die Oberteil-Seitenwandung 11a und die Unterteil-Seitenwandung 8a bilden zusammen eine Seitenwandung der Insektenfalle.

In dem Gehäuse 1a sind mehrere Insekteneingänge 12 mit entsprechenden äußeren Eingangsöffnungen ausgebildet. Die Insekteneingänge 12 sind durch die Oberteil-Seitenwandung 11a und die Unterteil-Seitenwandung 8a seitlich begrenzt. Die Insekteneingänge 12 münden in einen räumlich begrenzten Innenraum 15 des Gehäuses 1a.

Das Gehäuse 1a hat eine maximale Höhe H, die durch den zwischen dem Boden 7 und der Decke 10 vorliegenden vertikalen Abstand bestimmt ist. Das Gehäuse 1a weist eine maximale horizontale Querabmessung Q auf, die durch die Unterteil-Seitenwandung 8a bzw. Oberteil-Seitenwandung 11a bestimmt ist. Es gilt: 0,1 ≤ H/Q ≤ 0,9, insbesondere 0,15 ≤ H/Q ≤ 0,7, und insbesondere 0,3 ≤ H/Q ≤ 0,5.

In dem Boden 7 ist ein Anlockelement-Aufnahmekörper 16 eingesetzt. Der Anlockelement-Aufnahmekörper 16 hat eine kreisförmige Tragplatte 18, die komplementär zu einer in dem Boden 7, insbesondere zentral, ausgebildeten Bodenöffnung 17 ist. Der Anlockelement-Aufnahmekörper 16 weist außerdem eine von der Tragplatte 18 nach oben vorspringende, umfangsseitig geschlossene Aufnahmewand 19 auf. Durch die Tragplatte 18 und die Aufnahmewand 19 ist die Anlockelement-Aufnahme 2 räumlich begrenzt, in der ein geeigneter Lockstoff 21 zum Anlocken von Insekten aufgenommen ist. Insbesondere ist der Anlockelement-Aufnahmekörper 16 durch Herausdrehen aus dem Boden 7 entfernbar und durch Eindrehen wieder einsetzbar. Dafür sind an der Tragplatte 18 und dem Boden 7 entsprechende Gewindestege bzw. Gewindestegaussparungen 20 ausgebildet. Die Tragplatte 18 bildet ein Bodenteil.

Zwischen der Unterteil-Seitenwandung 8a und der Bodenöffnung 17 springt von dem Boden 7 eine umfangsseitig geschlossene Tragwandung 22 nach oben vor. Die Tragwandung 22 trägt beabstandet zu dem Boden 7 ein Personenschutz-Kunststoffgitter 34 und umgibt seitlich die Anlockelement-Aufnahme 2. Das Personenschutz-Kunststoffgitter 34 erstreckt sich horizontal oberhalb der Anlockelement-Aufnahme 2. Es überdeckt die Tragwandung 22 und den durch diese begrenzten Innenraum vollständig.

Zwischen der Unterteil-Seitenwandung 8a und der Tragwandung 22 springt von dem Boden 7 eine umfangsseitig geschlossene Haltewandung 35 nach oben vor. Die Haltewandung 35 hält beabstandet zu dem Boden 7 und dem Personenschutz-Kunststoffgitter 34 die Insekten-Tötungsanordnung 3a und umgibt seitlich die Tragwandung 22. Die Insekten-Tötungsanordnung 3a erstreckt sich horizontal oberhalb der Anlockelement-Aufnahme 2 und des Personenschutz-Kunststoffgitters 34. Sie überdeckt die Haltewandung 35 und den durch diese begrenzten Innenraum vollständig.

Die Insekten-Tötungsanordnung 3a umfasst ein erstes Insekten-Tötungsgitter 36 mit ersten Insekten-Tötungselementen 23a und ein zweites Insekten-Tötungsgitter 37 mit zweiten Insekten-Tötungselementen 24a. Die Insekten-Tötungsgitter 36, 37 sind vertikal beabstandet zueinander angeordnet und haben so unterschiedliche Abstände zu dem Boden 7. Gemäß dieser bevorzugten Ausführungsform hat das erste Insekten-Tötungsgitter 36 einen geringeren Abstand zu dem Boden 7 als das zweite Insekten-Tötungsgitter 37. Es ist also unter dem zweiten Insekten-Tötungsgitter 37 angeordnet. Die ersten und zweiten Insekten-Tötungselemente 23a und 24a sind durch Leiterdrähte gebildet. Sie sind aus einem elektrisch leitfähigen metallischen Material gebildet und in einem Rahmen 25a gehalten, der sich oben an die Haltewandung 35 anschließt.

Zwischen den Insekten-Tötungsgittern 36, 37 ist ein Isolationsgitter 38 angeordnet.

Zwischen der Haltewandung 35 und der Unterteil-Seitenwandung 8a springen von dem Boden 7 mehrere Unterteil-Verbindungsstifte 26 nach oben in Richtung auf die Decke 10 vor. In/an jedem Unterteil-Verbindungsstift 26 ist ein elektrischer Leiter (nicht dargestellt) geführt, der mit der Insekten-Tötungsanordnung 3a in direkter elektrischer Verbindung steht und an seinem freien, der Decke 10 zugewandten Ende einen freien elektrischen Kontakt 26a trägt.

Zwischen einem freien oberen Ende der Unterteil-Seitenwandung 8a und einem freien oberen Ende der Haltewandung 35 erstreckt sich eine Führungsschräge 41. Die Führungsschräge 41 verläuft von der Unterteil-Seitenwandung 8a aus nach innen unten. Die Unterteil-Verbindungsstifte 26 springen alternativ von der Führungsschräge 41 nach oben vor.

Die Energieversorgungseinrichtung 4a umfasst hier einen innenseitig an der Decke 10 angeordneten Akkumulator 30 bzw. eine Batterie.

Der mindestens eine Akkumulator 30 steht mit einer Elektroeinheit 31 in elektrischer Verbindung, die innenseitig an der Decke 10 angebracht ist.

Die Elektroeinheit 31 steht mit drei am Oberteil 6a angeordneten LEDs 39 in elektrischer Verbindung, die beispielsweise einen Energiestand (wie voll, leer), Betriebszustand (wie im Betrieb, außer Betrieb, Leerung erforderlich) oder dergleichen anzeigen. Ferner steht die Elektroeinheit 31 mit einem Anschluss 40 für eine externe Stromversorgung bzw. zum Aufladen des Akkumulators 30, sofern vorhanden, in elektrischer Verbindung.

Von der Decke 10 springen innenseitig Oberteil-Verbindungsstifte 33 nach unten in Richtung auf den Boden 7 vor. In/an jedem Oberteil-Verbindungsstift 33 ist ein elektrischer Leiter (nicht dargestellt) geführt, der mit der Elektroeinheit 31 in elektrischer Verbindung steht und an seinem freien, dem Boden 7 zugewandten Ende einen freien elektrischen Kontakt 33a trägt.

In zusammengesetztem Zustand des Gehäuses 1a stehen die Oberteil-Verbindungsstifte 33 mit den Unterteil-Verbindungsstiften 26 über die Kontakte 33a, 26a in elektrischer Verbindung. Die ersten und zweiten Insekten-Tötungselemente 23a, 24a stehen dann mit der Energieversorgungseinrichtung 4a bzw. der Elektroeinheit 31 in elektrischer Verbindung, so dass an den Insekten-Tötungselementen 23a, 24a eine elektrische Spannung anliegt.

Nachfolgend wird der Einsatz der Insektenfalle beschrieben. Dieser ist im Wesentlichen entsprechend der Insektenfalle gemäß Fig. 1. Auf die vorherige Beschreibung wird verwiesen.

Die angelockten Insekten nähern sich wieder dem Lockstoff 21, wobei sie sich dabei auch der Insekten-Tötungsanordnung 3a, die unter elektrischer Hochspannung gesetzt ist, nähern.

Wenn ein Insekt das unter elektrischer Hochspannung stehende Material eines oberen zweiten Insekten-Tötungselements 24a berührt bzw. sich unmittelbar benachbart zu diesem befindet, wird dieses Insekt mittels einer Funkenentladung bzw. eines elektrischen Kurzschlusses getötet bzw. vernichtet. Durch die Insekten fließt dann kurzzeitig ein tödlicher elektrischer Strom. Das Isolationsgitter 38 verhindert, dass die ersten und zweiten Insekten-Tötungselemente 23a, 24a einander berühren.

Über die Führungsschräge 41 sind die getöteten Insekten aus dem Gehäuse 1a bzw. dem Unterteil 5a einfach über die Insekteneingänge 12 hinaus schüttelbar.

Von Zeit zu Zeit wird der Lockstoff 21 ersetzt. Dazu wird der Anlockelement-Aufnahmekörper 16 aus dem Boden 7 nach unten heraus gedreht. Der neu mit Lockstoff 21 bestückte Anlockelement-Aufnahmekörper 16 wird analog dann wieder in den Boden 7 eingesetzt. Das Personenschutz-Kunststoffgitter 34 verhindert dabei eine Berührung der Insekten-Tötungsanordnung 3a.

Gemäß einer alternativen, nicht dargestellten Ausführungsform ist die Energieversorgungseinrichtung bzw. die Elektroeinheit über Drähte mit der Insekten-Tötungsanordnung elektrisch verbunden.

## Patentansprüche

1. Insektenfalle,
a) mit einem Gehäuse (1; 1a), das aufweist
i) mindestens einen Insekteneingang (12),
ii) ein Oberteil (6; 6a), und
iii) ein mit dem Oberteil (6; 6a) in Verbindung stehendes Unterteil (5; 5a),
b) mit mindestens einer in dem Gehäuse (1; 1a) angeordneten Anlockelement-Aufnahme (2) zum Aufnehmen mindestens eines Insekten-Anlockelements (21),
c) mit einer elektrischen Insekten-Tötungsanordnung (3; 3a), die
i) in dem Gehäuse (1; 1a) angeordnet ist, und
ii) sich zumindest teilweise benachbart zu der mindestens einen Anlockelement-Aufnahme (2) erstreckt, und
d) mit mindestens einer mit der elektrischen Insekten-Tötungsanordnung (3; 3a) in elektrischer Verbindung stehenden elektrischen Energieversorgungseinrichtung (4; 4a) zum Töten angelockter Insekten mittels eines elektrischen Schlags, wobei die mindestens eine Energieversorgungseinrichtung (4; 4a) an dem Oberteil (6; 6a) angeordnet ist,
e) wobei das Unterteil (5; 5a) und das Oberteil (6; 6a) in zusammengesetztem Zustand der Insektenfalle über mindestens ein Verbindungselement (26, 33) miteinander in Verbindung stehen,
**dadurch gekennzeichnet, dass**
f) die Insekten-Tötungsanordnung (3; 3a) in dem Unterteil (5; 5a) angeordnet ist, und
g) das Unterteil (5; 5a) und das Oberteil (6; 6a) über das mindestens eine Verbindungselement (26, 33) zum elektrischen Verbinden der mindestens einen Energieversorgungseinrichtung (4; 4a) mit der Insekten-Tötungsanordnung (3; 3a) elektrisch miteinander verbunden sind.

2. Insektenfalle nach Anspruch 1, **dadurch gekennzeichnet, dass** die Insekten-Tötungsanordnung (3; 3a) erste Insekten-Tötungselemente (23; 23a) und zweite Insekten-Tötungselemente (24; 24a) umfasst, wobei die ersten Insekten-Tötungselemente (23; 23a) aus einem elektrisch leitfähigen Material gebildet sind und mit einem ersten Pol der mindestens einen Energieversorgungseinrichtung (4; 4a) elektrisch verbunden sind, wobei die zweiten Insekten-Tötungselemente (24; 24a) aus einem elektrisch leitfähigen Material gebildet sind und mit einem zweiten Pol der mindestens einen Energieversorgungseinrichtung (4; 4a) elektrisch verbunden sind, wobei vorzugsweise zwischen den ersten Insekten-Tötungselementen (23a) und den zweiten Insekten-Tötungselementen (24a) mindestens ein elektrisches Isolationselement (38) zum Verhindern eines Kontakts zwischen diesen angeordnet ist.

3. Insektenfalle nach Anspruch 1 oder 2, **dadurch gekennzeichnet, dass** sich die Insekten-Tötungsanordnung (3; 3a) zumindest hauptsächlich, vorzugsweise ausschließlich, horizontal erstreckt.

4. Insektenfalle nach einem der vorherigen Ansprüche, **dadurch gekennzeichnet, dass** sich die Insekten-Tötungsanordnung (3; 3a) oberhalb der mindestens einen Anlockelement-Aufnahme (2) erstreckt, wobei vorzugsweise zwischen der Insekten-Tötungsanordnung (3a) und der mindestens einen Anlockelement-Aufnahme (2) mindestens ein elektrisches Personenschutz-Isolationselement (34) zum Verhindern einer Berührung der Insekten-Tötungsanordnung (3a) bei Montage und/oder Demontage der mindestens einen Anlockelement-Aufnahme (2) angeordnet ist.

5. Insektenfalle nach einem der vorherigen Ansprüche, **gekennzeichnet durch** mindestens ein in dem Unterteil (5), insbesondere entnehmbar, angeordnetes Insekten-Auffangelement (27) für die getöteten Insekten.

6. Insektenfalle nach einem der vorherigen Ansprüche, **gekennzeichnet durch** eine Anzeige (28, 39), die einen Energiestand der mindestens einen Energieversorgungseinrichtung (4), einen Betriebszustand und/oder eine Anzahl der erzeugten elektrischen Schläge der Insekten-Tötungsanordnung (3) anzeigt.

7. Insektenfalle nach einem der vorherigen Ansprüche, **dadurch gekennzeichnet, dass** das mindestens eine Verbindungselement (33) mit der mindestens einen Energieversorgungseinrichtung (4; 4a) direkt elektrisch verbunden ist.

8. Insektenfalle nach einem der vorherigen Ansprüche, **dadurch gekennzeichnet, dass** das mindestens eine Verbindungselement (26) mit der Insekten-Tötungsanordnung (3) direkt elektrisch verbunden ist.

9. Insektenfalle nach einem der vorherigen Ansprüche, **dadurch gekennzeichnet, dass** das Oberteil (6; 6a) auswechselbar ist, wobei vorzugsweise verschiedene Oberteile (6; 6a) einsetzbar sind.

10. Insektenfalle nach einem der vorherigen Ansprüche, **dadurch gekennzeichnet, dass** die mindestens eine Anlockelement-Aufnahme (2) zum Ersetzen des mindestens einen Insekten-Anlockelements (21) in zusammengesetztem Zustand des Gehäuses (1; 1a) über ein Bodenteil (18) des Unterteils (5; 5a) ausbaubar ist.

11. Insektenfalle nach einem der vorherigen Ansprüche, **dadurch gekennzeichnet, dass** die mindestens eine Anlockelement-Aufnahme (2) beheizbar ist.

## Claims

1. Insect trap,
a) with a housing (1; 1a) which has
i) at least one insect entrance (12),
ii) an upper part (6; 6a), and
iii) a lower part (5; 5a) communicating with the upper part (6; 6a),
b) with at least one attracting element receptacle (2) arranged in the housing (1; 1a) for receiving at least one insect attracting element (21),
c) with an electric insect killing arrangement (3; 3a), which
i) is arranged in the housing (1; 1a), and
ii) extends at least partially adjacent to the at least one attracting element receptacle (2), and
d) with at least one electric power supply device (4; 4a) in electric communication with said electric insect killing arrangement (3; 3a) for killing attracted insects by means of an electric shock, said at least one power supply device (4; 4a) being arranged on said upper part (6; 6a),
e) wherein the lower part (5; 5a) and the upper part (6; 6a) in the assembled state of the insect trap are connected to each other via at least one connecting element (26, 33),
**characterized in that**
f) the insect killing arrangement (3; 3a) is arranged in the lower part (5; 5a), and
g) the lower part (5; 5a) and the upper part (6; 6a) are electrically connected to each other via the at least one connecting element (26, 33) for electrically connecting the at least one power supply device (4; 4a) to the insect killing arrangement (3; 3a).

2. Insect trap according to claim 1, **characterized in that** the insect killing arrangement (3; 3a) comprises first insect killing elements (23; 23a) and second insect killing elements (24; 24a), said first insect killing elements (23; 23a) being formed of an electrically conductive material and being electrically connected with a first pole of said at least one power supply device (4; 4a), said second insect killing elements (24; 24a) being formed of an electrically conductive material and being electrically connected with a second pole of said at least one power supply device (4; 4a), wherein at least one electrical insulation element (38) is arranged preferably between said first insect killing elements (23a) and said second insect killing elements (24a) for preventing contact therebetween.

3. Insect trap according to claim 1 or 2, **characterized in that** the insect killing arrangement (3; 3a) extends at least mainly, preferably exclusively, horizontally.

4. Insect trap according to any one of the preceding claims, **characterized in that** the insect killing arrangement (3; 3a) extends above the at least one attracting element receptacle (2), wherein preferably between the insect killing arrangement (3a) and the at least one attracting element receptacle (2) at least one electrical personal protection insulation element (34) is arranged for preventing contact of the insect killing arrangement (3a) during the assembly and/or disassembly of the at least one attracting element receptacle (2).

5. Insect trap according to any one of the preceding claims, **characterized by** at least one insect collecting element (27) for the killed insects, arranged in the lower part (5), in particular in a removable manner.

6. Insect trap according to any one of the preceding claims, **characterized by** a display (28, 39) indicating a power level of the at least one power supply device (4), an operating state and/or a number of generated electric shocks of the insect killing arrangement (3).

7. Insect trap according to any one of the preceding claims, **characterized in that** the at least one connecting element (33) is directly electrically connected with the at least one power supply device (4; 4a).

8. Insect trap according to any one of the preceding claims, **characterized in that** the at least one connecting element (26) is directly electrically connected with the insect killing arrangement (3).

9. Insect trap according to any one of the preceding claims, **characterized in that** the upper part (6; 6a) is replaceable, wherein preferably different upper parts (6; 6a) are insertable.

10. Insect trap according to any one of the preceding claims, **characterized in that** the at least one attracting element receptacle (2) is removable via a bottom portion (18) of the lower part (5; 5a), for replacing the at least one insect attracting element (21) in an assembled state of the housing (1; 1a).

11. Insect trap according to any one of the preceding claims, **characterized in that** the at least one attracting element receptacle (2) is heatable.

## Revendications

1. Piège à insectes,
a) avec un boîtier (1 ; 1a), qui a
(i) au moins une entrée d'insectes (12),
ii) une partie supérieure (6 ; 6a), et
iii) une partie inférieure (5 ; 5a) étant en communication avec la partie supérieure (6 ; 6a),
b) avec au moins un logement d'élément d'attraction (2) disposé dans le boîtier (1 ; 1a) pour recevoir au moins un élément d'attraction d'insectes (21),
c) avec un agencement électrique d'élimination d'insectes (3 ; 3a), qui
i) est disposé dans le boîtier (1 ; 1a), et
ii) s'étend au moins partiellement de manière adjacente à l'au moins un logement d'élément d'attraction (2), et
d) avec au moins un moyen d'alimentation électrique (4 ; 4a) en communication électrique avec ledit agencement électrique d'élimination d'insectes (3 ; 3a) pour tuer les insectes attirés au moyen d'un choc électrique, ledit au moins un moyen d'alimentation électrique (4 ; 4a) étant disposé sur ladite partie supérieure (6 ; 6a),
e) dans lequel la partie inférieure (5 ; 5a) et la partie supérieure (6 ; 6a) à l'état assemblé du piège à insectes sont reliées l'une à l'autre par au moins un élément de liaison (26, 33),
**caractérisé en ce que**
f) l'agencement d'élimination d'insectes (3 ; 3a) est disposé dans la partie inférieure (5 ; 5a), et
g) la partie inférieure (5 ; 5a) et la partie supérieure (6 ; 6a) sont reliées électriquement l'une à l'autre par l'intermédiaire de l'au moins un élément de liaison (26, 33) pour relier électriquement l'au moins un moyen d'alimentation électrique (4 ; 4a) à l'agencement d'élimination d'insectes (3 ; 3a).

2. Piège à insectes selon la revendication 1, **caractérisé en ce que** ledit agencement d'élimination d'insectes (3 ; 3a) comprend des premiers éléments d'élimination d'insectes (23 ; 23a) et des deuxièmes éléments d'élimination d'insectes (24 ; 24a), lesdits premiers éléments d'élimination d'insectes (23 ; 23a) étant formés d'un matériau électriquement conducteur et étant électriquement connectés à un premier pôle dudit au moins un moyen d'alimentation électrique (4 ; 4a), lesdits deuxièmes éléments d'élimination d'insectes (24 ; 24a) étant formés d'un matériau électriquement conducteur et étant électriquement connectés à un deuxième pôle dudit au moins un moyen d'alimentation électrique (4 ; 4a), au moins un élément d'isolation électrique (38) étant disposé de préférence entre lesdits premiers éléments d'élimination d'insectes (23a) et lesdits deuxièmes éléments d'élimination d'insectes (24a) pour empêcher tout contact entre eux.

3. Piège à insectes selon la revendication 1 ou 2, **caractérisé en ce que** l'agencement d'élimination d'insectes (3 ; 3a) s'étend au moins principalement, de préférence exclusivement, horizontalement.

4. Piège à insectes selon l'une quelconque des revendications précédentes, **caractérisé en ce que** l'agencement d'élimination d'insectes (3 ; 3a) s'étend au-dessus de l'au moins un logement d'élément d'attraction (2), dans lequel, de préférence, entre l'agencement d'élimination d'insectes (3a) et l'au moins un logement d'élément d'attraction (2), au moins un élément d'isolation de protection personnelle électrique (34) est disposé pour empêcher le contact de l'agencement d'élimination d'insectes (3a) pendant le montage et/ou le démontage de l'au moins un logement d'élément d'attraction (2).

5. Piège à insectes selon l'une quelconque des revendications précédentes, **caractérisé par** au moins un élément collecteur d'insectes (27) pour les insectes tués, disposé dans la partie inférieure (5), en particulier de manière à pouvoir être prélevé.

6. Piège à insectes selon l'une quelconque des revendications précédentes, **caractérisé par** une affiche (28, 39) indiquant un niveau de puissance de l'au moins moyen d'alimentation électrique (4), un état de fonctionnement et/ou un nombre de chocs électriques générés par l'agencement d'élimination d'insectes (3).

7. Piège à insectes selon l'une quelconque des revendications précédentes, **caractérisé en ce que** l'au moins un élément de liaison (33) est directement relié électriquement à l'au moins un moyen d'alimentation électrique (4 ; 4a).

8. Piège à insectes selon l'une quelconque des revendications précédentes, **caractérisé en ce que l**'au moins un élément de liaison (26) est directement relié électriquement à l'agencement d'élimination d'insectes (3).

9. Piège à insectes selon l'une quelconque des revendications précédentes, **caractérisé en ce que** la partie supérieure (6 ; 6a) peut être remplacée, dans lequel de préférence différentes parties supérieures (6 ; 6a) peuvent être insérées.

10. Piège à insectes selon l'une quelconque des revendications précédentes, **caractérisé en ce que** l'au moins un logement d'élément d'attraction (2) peut être démonté pour remplacer l'au moins un élément d'attraction d'insectes (21), dans un état assemblé du boîtier (1 ; 1a), via une partie de fond (18) de la partie inférieure (5 ; 5a).

11. Piège à insectes selon l'une quelconque des revendications précédentes, **caractérisé en ce que** l'au moins un logement d'élément d'attraction (2) peut être chauffé.
